# DEMANDE DE BREVET EUROPEEN

(11) **EP 0 837 276 A1**
(43) Date de publication de la demande: **22.04.1998**
(21) Numéro de dépôt: 97402354.1
(22) Date de dépôt: 07.10.1997
(51) Int. Cl.: F16L 3/08, F16L 3/137

(54) **Embase de fixation de câble**

(30) Priorité: 18.10.1996 FR 9612683
(71) Demandeur: SOCIETE DE PROSPECTION ET D'INVENTIONS TECHNIQUES SPIT, F-26501 Bourg-Les-Valence Cédex (FR)
(72) Inventeur: Gonnet, Louis, 07300 Saint Jean De Muuzols (FR); Jaillet, Guy, 26600 La Rouche De Glun (FR)
(74) Mandataire: Bloch, Gérard

(57) **Abrégé**

L'embase comporte une portion support de câble (20) avec une lumière (2) pour un collier de maintien du câble (9), et une portion (30) de fixation de l'embase. La portion de fixation (30) est adjacente à la portion support (20) et comprend un téton (3) de réception de tampon de fixation. L'embase peut être fixée directement par ancrage d'un tampon.

## Description

La présente invention concerne une embase de fixation de câble. On utilise souvent de telles embases dans le secteur du bâtiment afin de fixer des câbles à des parois.

Une embase de fixation de câble comprend généralement des moyens de support de câble, des moyens pour maintenir le câble sur les moyens de support et des moyens de fixation de l'embase à la paroi.

On connaît une embase présentant :
- une surface support sur laquelle on vient placer le câble ;
- une lumière, dans l'embase, dans laquelle on insère un collier qui vient enserrer le câble et ainsi le maintenir sur l'embase et
- un tampon moulé avec l'embase que l'on insère dans la paroi afin d'y fixer l'embase.

Ce dispositif nécessite cependant de percer un trou dans la paroi avant d'y insérer le tampon de l'embase.

La demanderesse a cherché à éliminer l'inconvénient de ce dispositif.

A cet effet, la présente invention concerne une embase du type mentionné ci-dessus, caractérisée par le fait que les moyens de fixation de l'embase comprennent des moyens de réception d'un tampon de fixation.
Grâce à l'invention, il n'est plus nécessaire de percer un trou dans le matériau support de l'embase préalablement à sa fixation. L'embase de l'invention peut être fixée à la paroi directement par ancrage d'un tampon de fixation.

De préférence, les moyens de réception de tampon sont ménagés sur une portion de l'embase adjacente aux moyens de maintien de câble.

On pourrait éventuellement prévoir, en variante, un trou de réception de tampon ménagé dans la portion d'embase comportant les moyens de maintien de câble.

Avantageusement, les moyens de réception comporte un téton d'éclatement agencé pour éclater la bague de guidage du tampon, s'il en est pourvu, lors de la mise en place du tampon.

De préférence encore, les moyens de fixation comportent des moyens d'emmanchement, conformés pour coopérer avec l'extrémité d'un outil de fixation et s'y adapter de façon amovible.

L'invention sera mieux comprise à l'aide de la description suivante de l'embase de fixation de câble, en référence au dessin annexé, sur lequel :
- la figure 1 représente une vue de dessus en perspective de l'embase de fixation de câble ;
- la figure 2 représente une vue de dessous en perspective de l'embase de fixation de câble et
- la figure 3 représente, à plus grande échelle, une vue en coupe de l'embase de fixation de câble fixée à une paroi et sur laquelle est maintenu un câble.

L'embase, de forme parallélépipédique, monobloc, présente ici un plan de symétrie et comprend deux parties adjacentes:
- une portion 20 de support et de maintien de câble et
- une portion 30 de réception de tampon.

La portion de support de câble 30 présente, dans sa partie centrale, une surface 1 perpendiculaire au plan de symétrie et rainurée parallèlement à ce plan, pour servir d'appui au câble.

Sous cette surface 1 est ménagé une lumière transversale 2 ici de section rectangulaire, s'étendant perpendiculairement au plan de symétrie.

La portion de réception du tampon 30 présente une cuvette d'emmanchement parallélépipédique 17 au centre de laquelle se dresse un téton d'éclatement 3 percé axialement d'un trou traversant 5. L'extrémité libre 4 du téton d'éclatement 3 est conique. Sur les bords 21,24 de la cuvette d'emmanchement 17 sont disposées des rainures de saisie 12.

Les deux bords parallèles 7,23 de la cuvette 17, et perpendiculaires au plan de symétrie de l'embase, sont échancrés. Le fond de l'échancrure extérieure forme une bande d'appui 13 tandis que l'autre bord, intérieur, forme une portion de la surface 1. De l'autre côté de la surface 1, par rapport à la cuvette 17, sont formées des nervures 14,15 faisant saillie hors de la surface 1. Les bords de la cuvette 17 et les nervures 14,15 de la portion de support 20 forment avec la bande 13 et la surface d'appui 1 des épaulements 14,15,16,18,19,22 de positionnement ou de retenue du câble.

La face inférieure 6 de l'embase, opposée à la surface 1, est plane.

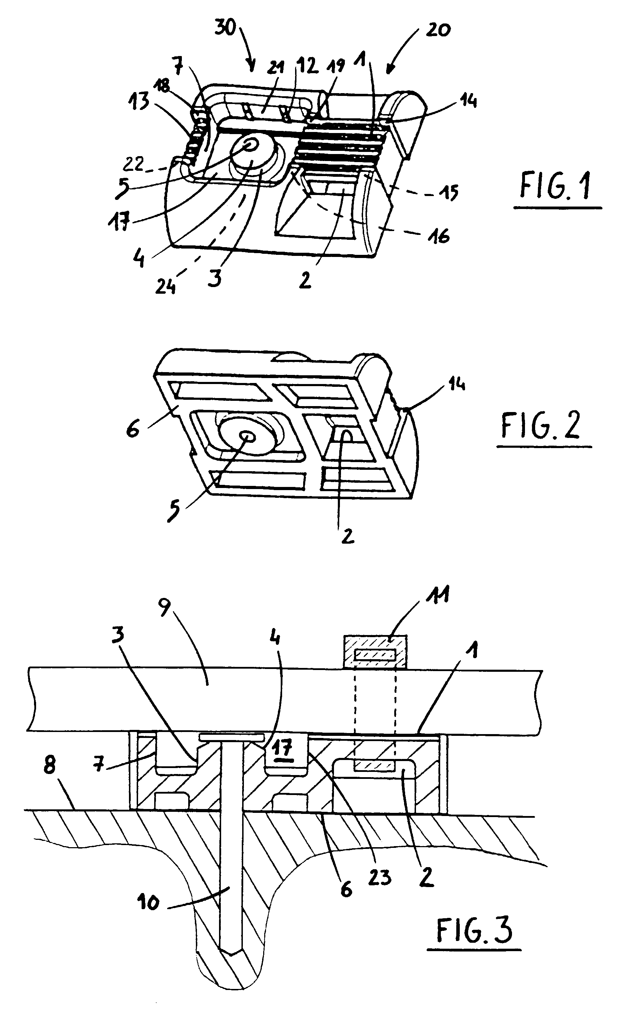

La figure 3 montre l'embase de fixation de câble fixée à une paroi 8 et maintenant un câble 9.

La face 6 de l'embase est appliquée sur la paroi 8. Un tampon 10 traverse le trou 5 et est enfoncé dans la paroi 8 afin d'y fixer l'embase. Le câble 9 est posé sur la surface 1 et y est maintenu par un collier 11 traversant la lumière 2 et enserrant le câble 9.

Pour la fixation de l'embase sur la paroi 8, l'extrémité de l'outil de mise en place du tampon 10 est emmanchée légèrement à force dans la cuvette 17 de l'embase. L'embase est maintenue sur l'outil par les nervures 12. Après fixation, il suffit de dégager l'outil de l'embase.

## Revendications

1. Embase de fixation de câble comprenant:
- des moyens de support de câble (20) ;
- des moyens (2,11) pour maintenir le câble (9) sur les moyens (20) support et
- des moyens (30) de fixation de l'embase,
caractérisée par le fait que les moyens de fixation de l'embase comprennent des moyens (3,5) de réception d'un tampon de fixation (10).

2. Embase selon la revendication 1, dans laquelle les moyens de réception de tampon (3,5) sont ménagés sur une portion de l'embase (30) adjacente aux moyens (2,11) de maintien de câble.

3. Embase selon l'une des revendications 1 et 2, dans laquelle les moyens (3,5) de réception de tampon comportent un téton d'éclatement (3).

4. Embase selon l'une des revendications 1 à 3, dans laquelle les moyens de fixation (30) comportent des moyens d'emmanchement (17,12).
